# EUROPEAN PATENT SPECIFICATION

(11) **EP 4 167 811 B1**
(45) Date of publication and mention of the grant of the patent: **31.07.2024**
(21) Application number: 21742493.6
(22) Date of filing: 18.06.2021
(51) Int. Cl.: A47J 31/44

(54) **COFFEE MACHINE WITH AUTOMATIC LOCKING OF THE FILTER-HOLDER**
KAFFEEMASCHINE MIT AUTOMATISCHER VERRIEGELUNG DES FILTERHALTERS
MACHINE À CAFÉ À VERROUILLAGE AUTOMATIQUE DU PORTE-FILTRE

(30) Priority: 19.06.2020 EP 20181248; 13.10.2020 IT 202000024145
(43) Date of publication of application: 26.04.2023
(73) Proprietor: CARIMALI S.p.A., 24121 Bergamo (IT)
(72) Inventor: DOGLIONI MAJER, Andrea, 24121 Bergamo (IT); IEMMA, Lorenzo, 24121 Bergamo (IT); CERIANI, Alessandro, 24121 Bergamo (IT)
(74) Representative: Studio Torta S.p.A.
(86) International application number: PCT/IB2021/055403
(87) International publication number: WO 2021/255705

(56) References cited:
- EP-A1- 0 623 302
- EP-A1- 3 037 023

## Description

### Cross-Reference to Related Applications

This patent application claims priorities to European patent application no. 20181248.4 filed on 19.06.2020 and Italian patent application no. 102020000024145 filed on 13.10.2020.

### Technical Field of the Invention

The present invention relates to the field of machines for preparing coffee or similar beverages, and in particular it relates to a semi-automatic coffee machine for professional use in bars or for domestic use.

### Background of the Invention

As is well known, semi-automatic coffee machines comprise those machines in which a coffee beverage is largely made manually by an operator, while other operations are controlled automatically by an electronic control unit.

A typical operation that has to be carried out manually is, for example, loading the ground coffee, which normally requires the operator to remove the so-called filter-holder from the machine to load a dose of loose ground coffee or a pod or a disposable capsule into the filter-holder, and then to fluidtight couple the filter-holder to an annular supporting body which forms an outlet of a hot water injection assembly of the coffee machine.

Another operation that is controlled directly by the operator, normally by means of a button, is the start and, vice versa, the stop of the beverage delivery. In some types of semi-automatic machines, the beverage delivery is stopped automatically, based on a setting of the "length" of the coffee to be delivered in the cup.

In general, the filter-holder is coupled to the annular supporting body by means of a bayonet coupling device formed of at least two radial fins carried by the filter-holder and a corresponding number of slots formed in the annular supporting body.

Each fin, or, alternatively, each slot, is partially delimited by an inclined plane, which, when the filter-holder is coupled to the annular supporting body and the fins are displaced along the respective slots, engages an abutment plane formed on the corresponding slot, or, respectively, on the corresponding fin, so as to cause an axial displacement of the filter-holder towards the annular supporting body and consequent fluid-tight coupling of a free edge of the filter-holder against a frontal seal carried by the annular supporting body.

From the operator's point of view, coupling the filter-holder to the supporting annular body of the water injection assembly involves two sequential operations in order to bring the filter-holder first into an insertion configuration, in which the filter-holder is inserted in the annular body, and then into a tight coupling configuration, in which the filter-holder is tight-coupled onto the annular supporting body.

The insertion configuration is usually reached by vertically moving the filter-holder from bottom upwards so that the filter-holder is coupled frontally to the annular supporting body and the fins are aligned with corresponding slots. Typically, in the insertion configuration, the filter-holder is angularly offset (leftwards) from a frontal configuration with respect to the operator.

The tight coupling configuration is instead reached by rotating the filter-holder, typically by about 30°-40° and anticlockwise, starting from the insertion configuration, so as to move the fins along the slots until the free edge of the filter-holder is compressed against the frontal seal of the annular supporting body. Resultingly, in the tight coupling configuration the filter-holder is angularly offset from the insertion configuration and is typically placed frontally to the operator.

EP 3 037 023 A1 discloses a connecting device for connecting a filter-holder of an espresso machine to a hot water dispensing group for producing a beverage. The filter-holder comprises a body, provided with a handle, with an inner cavity delimited by a cylindrical wall and defining a housing for a filter, to be loaded with ground coffee. The cavity is open at an end facing the dispensing group, is closed with a bottom wall at the opposite end, and is provided with a beverage dispensing opening formed in the bottom wall. The filter-holder further comprises a pair of diametrically opposed fins projecting radially from the side wall and extending circumferentially outside the cavity. The water dispensing group comprises an opening designed to accommodate the open end of the inner cavity of body of the filter-holder and a pair of helical guides extending around an axis orthogonal to the plane on which the filter-holder connects to the water dispensing group. The helical guides are arranged around the opening and are each designed to accommodate thereon, by means of a bayonet coupling, a corresponding fin of the pair of fins of the filter-holder. The connecting device comprises a plate-like element fixed to the water delivery group and provided with an opening aligned with the opening of the water dispensing group and with a tubular cavity, which is open at both axial ends and is aligned with the axial openings and in a distal position relative to the opening of the water dispensing group. The connecting device further comprises an annular element which is arranged inside the tubular cavity of the plate-like element so as to freely rotate around the longitudinal axis thereof. The pair of helical guides is formed on the internal wall of the annular element and motor means are provided to angularly displace the annular element so as to servo-assist the insertion of the filter-holder into the water delivery group.

### Object and Summary of the Invention

The Applicant has found that known coffee machines of the type described above have a number of drawbacks that are well known to the operators in the sector.

In particular, the Applicant has found that one of these drawbacks is represented by the fact that the mechanical seal between the filter-holder and the water outlet of the water injection group is totally dependent on the effectiveness of the tight coupling of the coupling device, which is left exclusively to the action of the operator, i.e., the extent to which the operator is able to compress the filter-holder against the annular supporting body when rotating it from the insertion configuration to the tight coupling configuration.

As is well known, this operation requires not only a certain technique on the part of the operator, but above all a considerable effort, which can be extremely onerous from a physical point of view when it has to be repeated hundreds or even thousands of times a day, as in the case of a bartender, for example.

Moreover, the effort of tight coupling the filter-holder is not even the only one required to the operator, as the removal thereof also requires the operator to apply a not negligible force, at least in the first phase of the rotation in order to move the filter-holder away from the tight coupling configuration.

The Applicant has also found that another of the drawbacks of known coffee machines of the type described above is represented by the fact that the activation of the various operating functions of the coffee machines requires various interactions of the operator with different elements of the coffee machines.

The aim of the present invention is to provide improvements to remedy the above-described drawbacks.

According to the present invention, a coffee machine is provided, as claimed in the appended claims.

### Brief Description of the Drawings

Figure 1 shows, in perspective view and with parts removed for the sake of clarity, an embodiment of the coffee machine of the present invention.
Figure 2 shows, in exploded view, a detail of a water injection group of the coffee machine shown in Figure 1, and the filter-holder of the coffee machine in a disengagement configuration, in which filter-holder is disengaged from the water injection group.
Figure 3 shows the detail shown in Figure 2 in an assembled configuration, and the filter-holder in the aforementioned disengagement configuration.
Figure 4 shows, with parts removed for the sake of clarity, the coffee machine shown in Figure 1 during insertion of the filter-holder in the water injection group.
Figures 5 and 6 show the filter-holder engaged with the water injection group in an initial uncoupled configuration and in a final tight-coupled configuration of the filter-holder and the water injection group, respectively.
Figure 7 shows, in cross-section, the filter-holder and part of the water injection group arranged in the above-mentioned final tight-coupled configuration.
Figure 8 shows, in exploded view, a detail of the water injection group in a different embodiment of the coffee machine of the present invention and the filter-holder of the coffee machine in a disengagement configuration.
Figure 9 shows the detail shown in Figure 8 in an assembled configuration and the filter-holder in the above-mentioned disengagement configuration.
Figure 10 shows, with parts removed for the sake of clarity, the coffee machine shown in Figure 8 during insertion of the filter-holder on the water injection group.
Figures 11 and 12 show, in perspective view and, respectively, in a bottom view, the filter-holder shown in Figure 10 engaged with the water injection group in an initial uncoupled configuration.
Figures 13 and 14 show, in perspective view and, respectively, in bottom view, the filter-holder shown in Figure 10 engaged with the water injection group in a final tight-coupled configuration.
Figure 15 shows, in cross-section, the filter-holder and part of the water injection group arranged in the final tight-coupled configuration shown in Figure 14.
Figure 16 shows, in exploded view, a detail of the water injection group in a further different embodiment of the coffee machine of the present invention, and the filter-holder of the coffee machine in a disengagement configuration.
Figure 17 shows the detail shown in Figure 8 in an assembled configuration and the filter-holder in the above-mentioned disengagement configuration.
Figure 18 shows, with parts removed for the sake of clarity, the coffee machine shown in Figure 16 during insertion of the filter-holder on the water injection group;
Figures 19 and 20 show, in perspective view and, respectively, in bottom view, the filter-holder shown in Figure 18 engaged with the water injection group in an initial uncoupled configuration.
Figures 21 and 22 show, in perspective view and, respectively, in bottom view, the filter-holder shown in Figure 18 engaged with the water injection group in a final tight-coupled configuration.
Figure 23 shows, in cross-section, the filter-holder and part of the water injection group arranged in the final tight-coupled configuration shown in Figures 21 and 22.
Figure 24 shows, in perspective and with parts removed for the sake of clarity, a variant of the water injection group of the coffee machine of the present invention.
Figures 25, 26 and 27 show, in front view, three variants of a detail of the coffee machine of the present invention.

### Detailed description of preferred embodiments of the invention

The present invention will now be described in detail with reference to the accompanying drawings to enable a skilled person to realize and use it. Various modifications to the embodiments presented shall be immediately clear to persons skilled in the art and the general principles disclosed herein could be applied to other embodiments and applications but without thereby departing from the scope of protection of the present invention as defined in the appended claims. Therefore, the present invention should not be considered limited to the embodiments described and shown, but should be granted the widest protective scope in accordance with the features described and claimed.

Where not otherwise defined, all the technical and scientific terms used herein have the same meaning commonly used by persons of ordinary skill in the field pertaining to the present invention. In the event of a conflict, this description, including the definitions provided, shall be binding. Furthermore, the examples are provided for illustrative purposes only and as such should not be considered limiting.

In order to facilitate understanding of the embodiments described herein, reference will be made to some specific embodiments and a specific language will be used to describe them. The terminology used herein is for the purpose of describing only particular embodiments, and is not intended to limit the scope of the present invention.

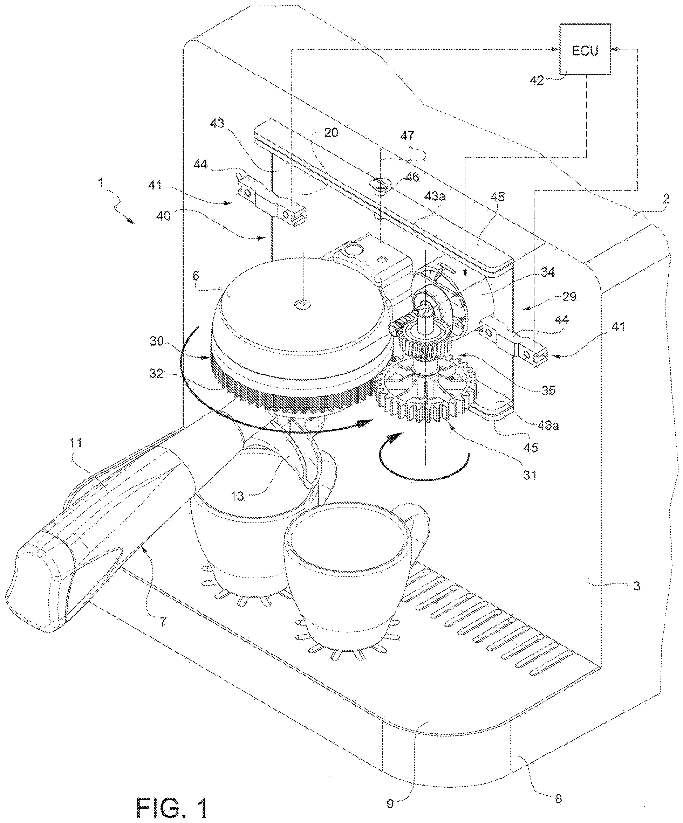

Figure 1 shows and denotes as a whole with the reference numeral 1 a semi-automatic coffee machine commonly for professional use in bars or for domestic use.

The coffee machine 1 comprises a box-shaped frame 2, which is delimited frontally, with respect to an operator, by a front wall 3, and a plurality of components for the production of coffee which are supported by the frame 2 and comprising a boiler 4 for the production of hot water arranged inside the frame 2.

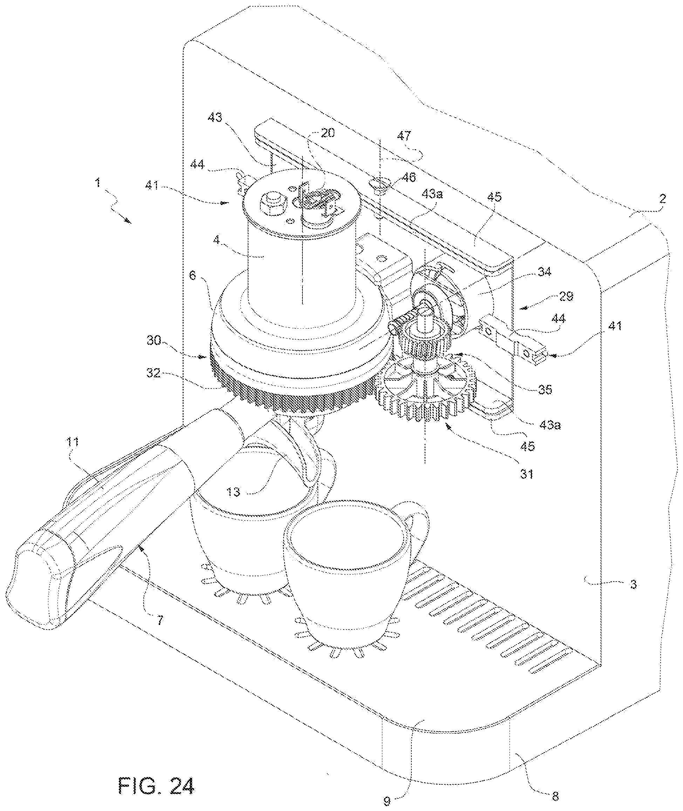

In a different embodiment, shown in Figure 24, the boiler 4 for the production of hot water is arranged outside the frame 2.

The front wall 3 can be either an external wall of the coffee machine 1 or an internal wall of the coffee machine 1 in turn protected by an external casing (not shown) which completely or partially covers the frame 2.

The boiler 4 comprises a hot water supply conduit 5, an end portion of which extends within a supporting body 6 mounted to protrude from the front wall 3 and configured to be releasably engaged by a filter-holder 7, which is designed to be filled with either loose ground coffee or a disposable coffee pod or capsule and to receive water from the supporting body 6.

From the lower end of the front wall 3, a drip tray 8 protrudes which is closed above by a grid 9 to support in use, one or more cups underneath the filter holder 7.

The filter-holder 7 comprises a cup 10 open at the top and a handle 11 extending radially from the cup 10 and designed to be gripped by an operator to couple and uncouple the cup 10 to/from the supporting body 6.

The cup 10 is provided at the bottom with a conduit 12 for the delivery of the coffee beverage, to which a two-way delivery spout 13 can be connected, preferably removably, to allow the coffee beverage to be delivered in two cups at the same time.

The cup 10 houses internally a cup-shaped filter 14 which is designed to receive either loose ground coffee or a coffee pod or capsule. Preferably, the filter 14 is made of metallic material, conveniently stainless steel, and has a perforated bottom wall and a lateral wall ending with an edge 15 which is U-folded outwards and is arranged astride a free end edge of the cup 10.

The cup 10 has, close to its open end, a number of projections or fins 16, which radially project outwardly from the cup 10 and define a portion of a coupling device 17, of the type commonly referred to as a "bayonet", designed to removably couple the cup 10, and hence the filter-holder 7, to the supporting body 6. In the examples shown in the accompanying Figures, the fins 16 are in number of three and are mutually equispaced around a longitudinal axis of the cup 10. In variants not shown, the fins 16 could be in number of two or more than three.

The fins 16 lie substantially on a horizontal plane perpendicular to the longitudinal axis of the cup 10 and are delimited at the bottom by respective inclined planes 18, all of which have the same inclination and orientation relative to the lying plane of the fins 16.

As shown in the accompanying Figures, the supporting body 6 is generically cup-shaped, with a concavity facing downwards, and comprises a tubular lateral wall 19, coaxial to a substantially vertical axis 20, and a bottom wall, through which the aforementioned end portion of the hot water supply conduit 5 is formed.

A hot water distribution shower 21 is mounted at the centre of the bottom wall, fluidically communicates with the hot water supply conduit 5, and is surrounded by an annular cavity 22 coaxial to the axis 20 and housing a frontal seal 23 which, as will be described in more detail below, has the function of fluid-tight coupling the filter-holder 7 and the supporting body 6 when the coupling device 17 is tight-coupled.

Furthermore, a number of transverse projections 24 are associated with the supporting body 6, which are arranged on the supporting body 6 so as to cooperate with the fins 16 when the filter-holder 7 is coupled to the supporting body 6. The transverse projections 24 define, together with the fins 16, the aforementioned coupling device 17, of which they form a further portion.

For this purpose, the transverse projections 24 are delimited at the top, i.e., towards the bottom wall of the supporting body 6, by respective abutment planes 25, which are coplanar to each other and perpendicular to the axis 20 and are configured to slidably engage with the inclined planes 18 in response to a relative rotation of the transverse projections 24 and the fins 16, in the manner and forms described below, so as to cause an upward displacement of the filter-holder 7 and the compression of the latter against the supporting body 6, resulting in a tight coupling of the coupling device 17.

In particular, as will be further clarified in the following description, the coupling of the filter-holder 7 to the supporting body 6 comprises a first completely manual step during which the operator brings the cup 10 of the filter-holder 7 close to the supporting body 6 through a vertical upward movement in order to arrange the filter-holder 7 in an insertion configuration, in which the fins 16 are arranged in the free spaces between the transverse projections 24, and the edge 15 of the filter 14 engages the cavity 22 and faces the, and preferably contacts the, frontal seal 23.

Conveniently, in order to ease the correct positioning of the filter-holder 7 in the insertion configuration and to keep it stable in this configuration prior to tight coupling the coupling device 17, a magnetic positioning device 26 is there is provided, which comprises a number of permanent magnets 27, each fixed to a respective fin 16, and a number of permanent magnets 28 mounted along the periphery of the bottom wall of the cup 10 in positions such that, when the filter-holder 7 is approached to the supporting body 6, the permanent magnets 28 are facing corresponding permanent magnets 27 of the fins 16. Preferably, the attractive force between the pairs of facing permanent magnets 27 and 28 is enough to hold the filter-holder 7 in the insertion configuration, even if the operator completely abandons the filter-holder 7 before the coupling device 17 is tight-coupled.

The coupling of the filter-holder 7 to the supporting body 6 further comprises a second step during which the coupling device 17 is tight-coupled. In this step, the fins 16 and the projections 24 are relatively rotated and the engagement between the inclined planes 18 and the abutment planes 25 causes the filter-holder 7 to move from the insertion configuration to a tight coupling configuration, in which the filter-holder 7 is arranged at a higher level than in the insertion configuration and the edge 15 of the filter 14 is compressed against the frontal seal 23 so as to achieve a fluid-tight coupling with the latter.

The coffee machine 1 further comprises an automation device 29 configured to automatically tight-couple and uncouple the coupling device 17 so as to relieve the operator of the physical effort associated with such operations.

In this respect, it should be noted that, since the relative rotation of the fines 16 and the transverse projections 24 causes the coupling device 17 to be tight-coupled and uncoupled, there is no conceptual difference, but only an implementation difference, between a type of actuation of the coupling device 17, in the following for descriptive convenience indicated as the first type of actuation, in which the transverse projections 24 rotate relative to the fins 16, and a type of actuation of the coupling device 17, in the following for descriptive convenience indicated as the second type of actuation, in which the fines 16 rotate relative to the transverse projections 24.

The automation device 29 comprises a toothed ring nut 30 carried by the supporting body 6 and mounted to rotate around the axis 20, and a drive device 31 operatively coupled to the toothed ring nut 30 to rotate it around the axis 20 and move it between a rest configuration, in which an operator is allowed to couple the filter-holder 7 to the supporting body 6 in order to arrange it in the insertion configuration, and an operating configuration, in which the filter-holder 7 is in the tight coupling configuration.

Depending on the type of actuation of the coupling device 17, the toothed ring nut 30 rotates the transverse projections 24 relative to the fins 16, or, vice versa, the fins 16 relative to the transverse projections 24 to tight-couple and uncouple the coupling device 17.

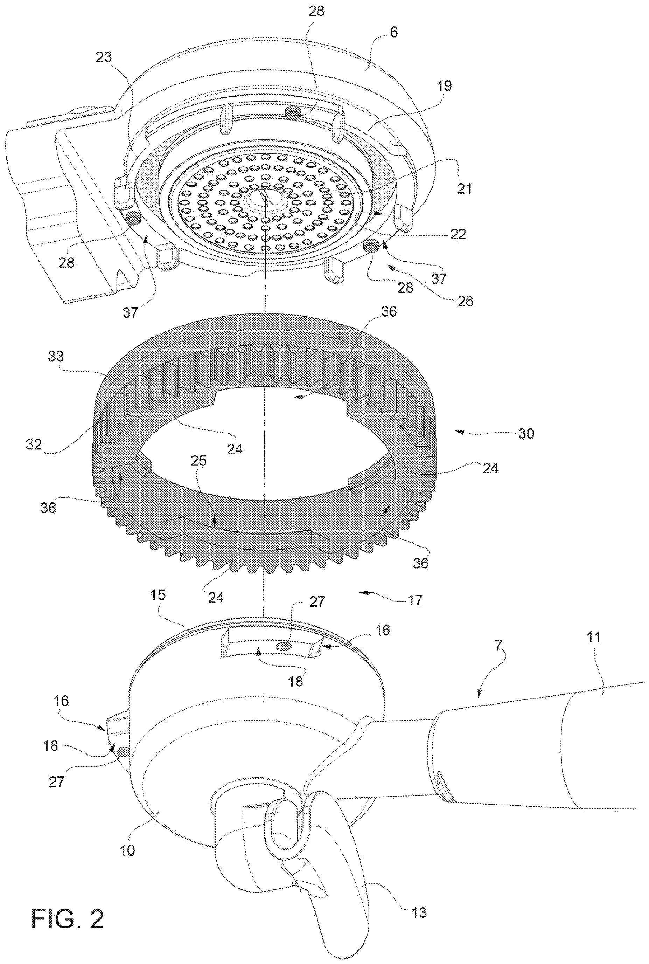

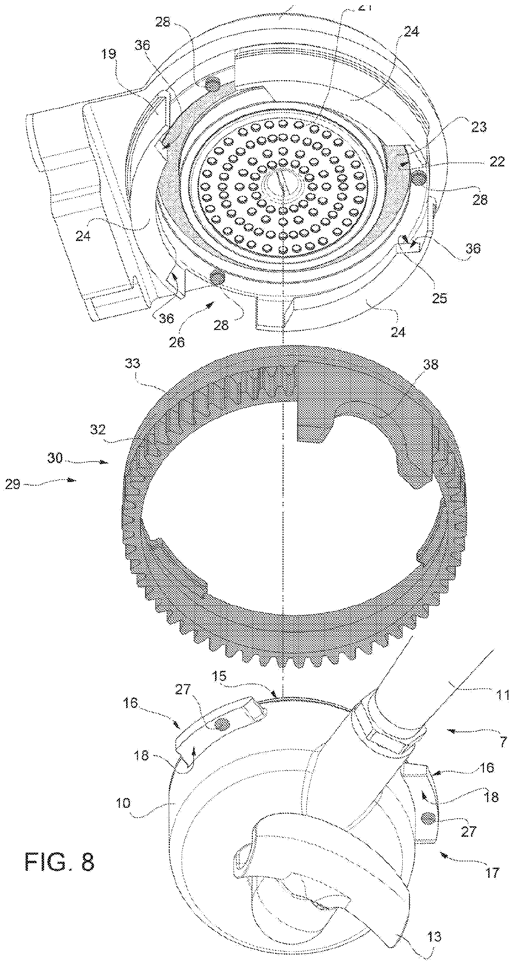

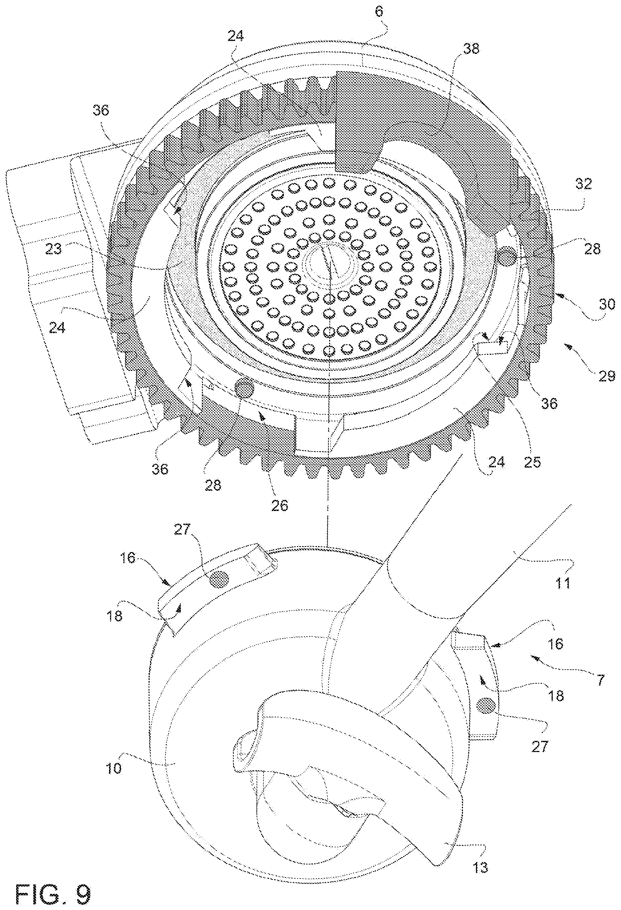

In particular, in the first type of actuation shown in Figures 2-7, the toothed ring nut 30 is mounted integral with the transverse projections 24 to rotate them relative to the fins 16, while in the second type of actuation (Figures 8-15 and 16-23), the toothed ring nut 30 is angularly coupled to the fins 16 to rotate them relative to the transverse projections 24.

The toothed ring nut 30 comprises an external toothing 32 coaxial to the axis 20 and formed on an annular body 33 rotatably mounted on the tubular side wall 19.

Preferably, the drive device 31 comprises an electric motor 34, arranged in the frame 2, and a gear transmission 35 designed to receive rotational motion from an output shaft of the electric motor 34 and transmit it, suitably reduced, to the ring nut 30. Preferably, the output shaft of the electric motor 34 extends through the front wall 3 and the gear transmission 35 is arranged outside the frame 2.

In an embodiment not shown, the drive device 31 comprises a gear motor entirely housed in the frame 2.

In the following, the automation device 29 will be described in more detail with explicit reference to each one of the two aforementioned types of actuation of the coupling device 17.

### FIRST TYPE OF ACTUATION OF THE COUPLING DEVICE

Figures 2 to 7 show an embodiment of the coffee machine 1 operating according to the first type of actuation of the coupling device 17, i.e., the type in which the transverse projections 24 rotate relative to the fins 16 and are rotated about the axis 20 by the toothed ring nut 30.

In this embodiment, the toothed ring nut 30, which is rotatably mounted on the tubular side wall 19, substantially forms an extension of the tubular lateral wall 19 and brings integrally the transverse projections 24 close to its own free end edge.

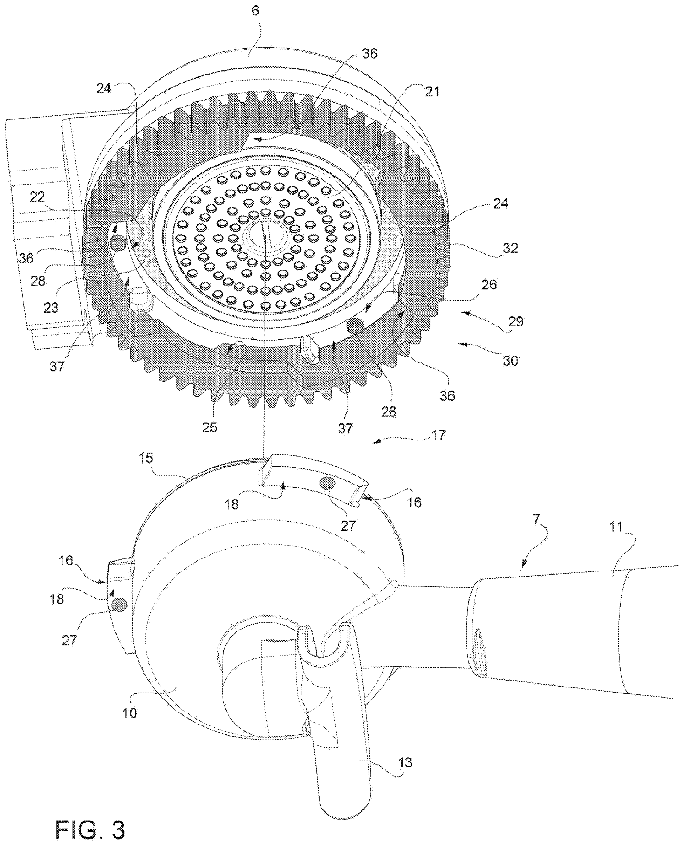

As shown in Figures 2 and 3, the transverse projections 24 extend from an inner surface of the toothed ring nut 30 towards the axis 20, are arranged with the respective abutment planes 25 facing the bottom wall of the supporting body 6, and are evenly distributed around the axis 20 such that free spaces 36 of sufficient angular width are circumferentially defined therebetween in order to allow the fines 16 to pass through the free spaces 36 in a direction parallel to the axis 20.

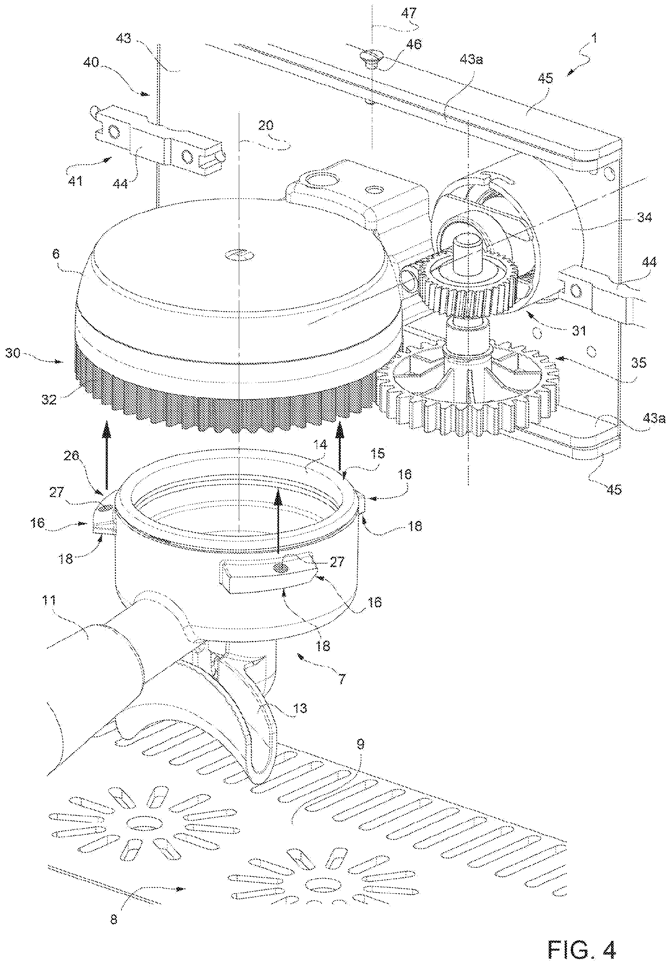

The supporting body 6 has a plurality of seats 37, which are distributed around the seal 23 so as to be axially aligned with corresponding free spaces 36 when the toothed ring nut 30 is in the rest configuration, and are so sized as to each accommodate a respective fin 16 when the filter-holder 7 is in the insertion configuration (Figure 4).

In order to attract the filter-holder 7 and then keep it stable in the insertion configuration, each seat 37 is provided with one of the aforementioned permanent magnets 28 of the positioning device 26 so as to cooperate, when the filter-holder 7 is approached to the supporting body 6, with the permanent magnet 27 of the corresponding fin 16.

Preferably, the seats 37 and, consequently, the toothed ring nut 30, are arranged around the axis 20 so that, when the filter-holder 7 is in the insertion configuration, the handle 11 of the filter-holder 7 is arranged frontally to the operator and generally perpendicular with respect to the front wall 3 of the casing 2. Since in the first type of actuation of the coupling device 17, the fins 16 of the filter-holder do not rotate during the tight coupling of the coupling device 17, but only undergo an axial upward displacement, the filter-holder 7 remains in the same frontal configuration relative to the operator even when it is in the tight coupling configuration.

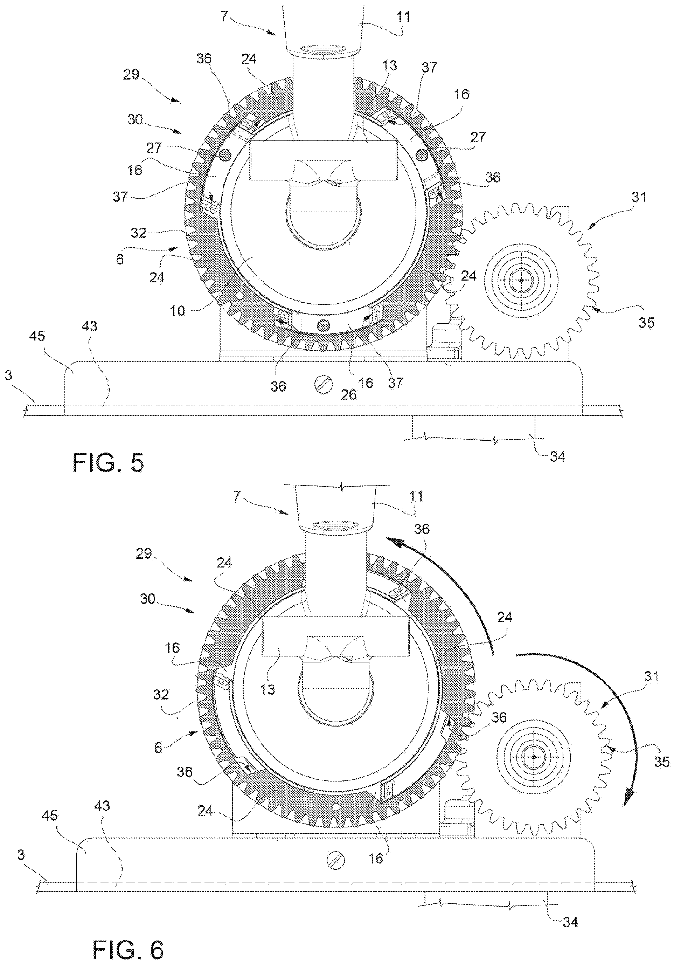

Figures 5 and 6 show how the coupling device 17 is tight-coupled by rotating the toothed ring nut 30 from the rest configuration, shown in Figure 5, to the operating configuration, shown in Figure 6.

In the rest configuration of the toothed ring nut 30, the filter-holder 7 is in the insertion configuration, in which the fins 16 engage the corresponding seats 37 and the edge 15 of the filter 14 engages the seal 23 frontally or is at least adjacent thereto.

As is clearly shown in Figure 6, in order to move the toothed ring nut 30 from the rest configuration to the operating configuration, the drive device 31 is operated to impart to the toothed ring nut 30 a rotation of such an extent as to cause the transverse projections 24 and the fins 16 to overlap, at least partially. During this rotation, the abutment planes 25 of the transverse projections 24 slide along the inclined planes 18 of the fins 16, imparting an upward thrust to the latter, and thus to the entire filter-holder 7.

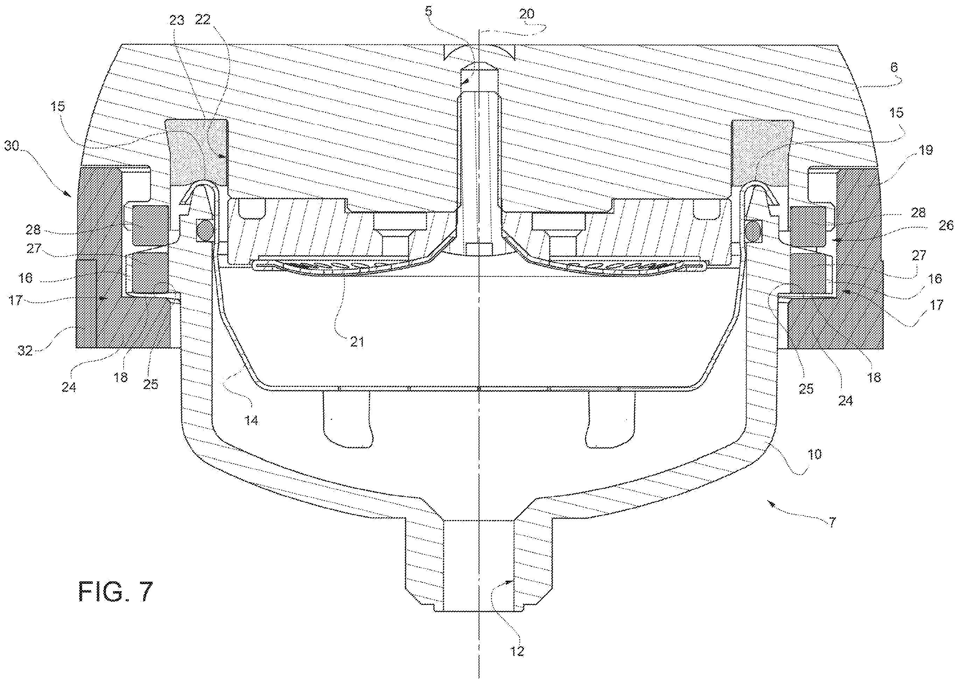

As shown in Figure 7, at the end of the rotation of the toothed ring nut 30, the filter-holder 7 is in the tight coupling configuration, in which the edge 15 of the filter 14 is compressed against the seal 23 so that the filter-holder 7 is fluid-tightly coupled to the supporting body 6.

### SECOND TYPE OF ACTUATION OF THE COUPLING DEVICE

Figures 8 to 15 and Figures 16 to 23 show respective embodiments of the coffee machine 1 operating according to the second type of actuation of the coupling device 17, i.e., the type in which the fins 16 rotate relative to the transverse projections 24 and the toothed ring nut 30 is angularly coupled to the fins 16 to rotate them about the axis 20.

In this embodiment, the transverse projections 24 are not carried by the toothed ring nut 30, but are integral with the tubular lateral wall 19. In particular, the transverse projections 24 are arranged along an end free edge of the tubular lateral wall 19, extend towards the axis 20, and the respective abutment planes 25 face the bottom wall of the supporting body 6.

Also in this embodiment, the transverse projections 24 are evenly distributed around the axis 20 and circumferentially define therebetween free spaces 36 of sufficient angular width to allow the fins 16 to pass through the free spaces 36 in a direction parallel to the axis 20.

In the sections corresponding to the free spaces 36, around the seal 23, the bottom wall of the supporting body 6 carries the permanent magnets 28 which, like in the previous embodiment, are designed to cooperate, when the filter-holder 7 is approached to the supporting body 6, with the permanent magnets 27 carried by the corresponding fins 16 in order to attract and retain, or help to retain, the filter-holder 7 in the insertion configuration.

As mentioned above, in the second type of actuation of the coupling device 17, the toothed ring nut 30 is angularly coupleable to the fins 16 and, hence, to the filter-holder 7, such that the filter-holder 7 is rotated around the axis 20 when it is actuated by the drive device 31.

The angular coupling between toothed ring nut 30 and filter-holder 7 is achieved when filter-holder 7 assumes the insertion configuration. Two examples of how this angular coupling can be achieved are given by the embodiments shown in Figures 8 to 15 and Figures 16 to 23, respectively.

In the embodiment shown in Figures is to 15, the toothed ring nut 30 is provided with a fork 38 configured to be arranged astride the handle 11 of the filter-holder 7 when the latter is in the insertion configuration, thereby making the filter-holder 7 and the toothed ring nut 30 angularly integral.

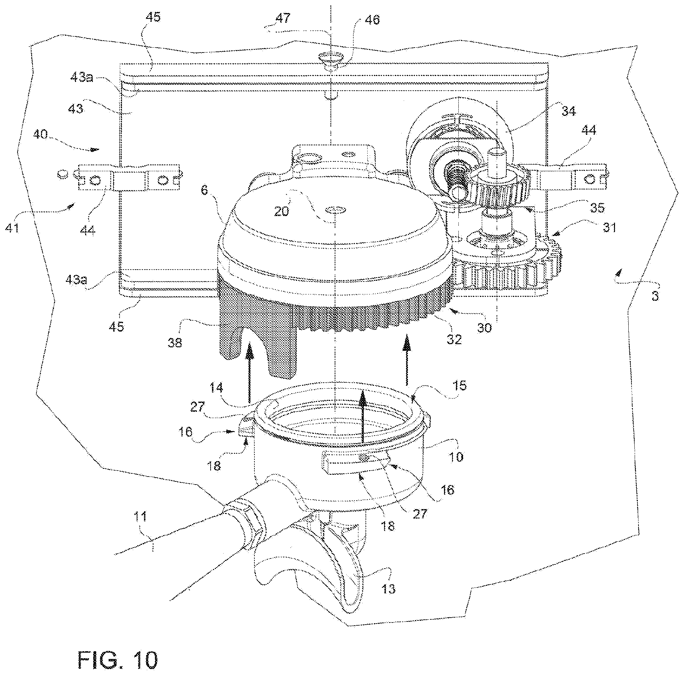

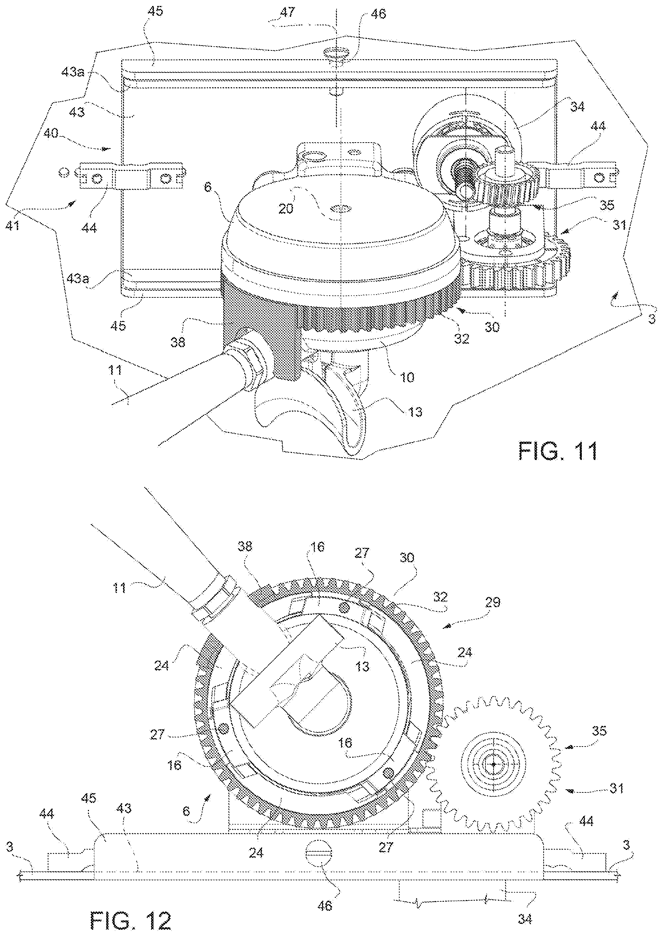

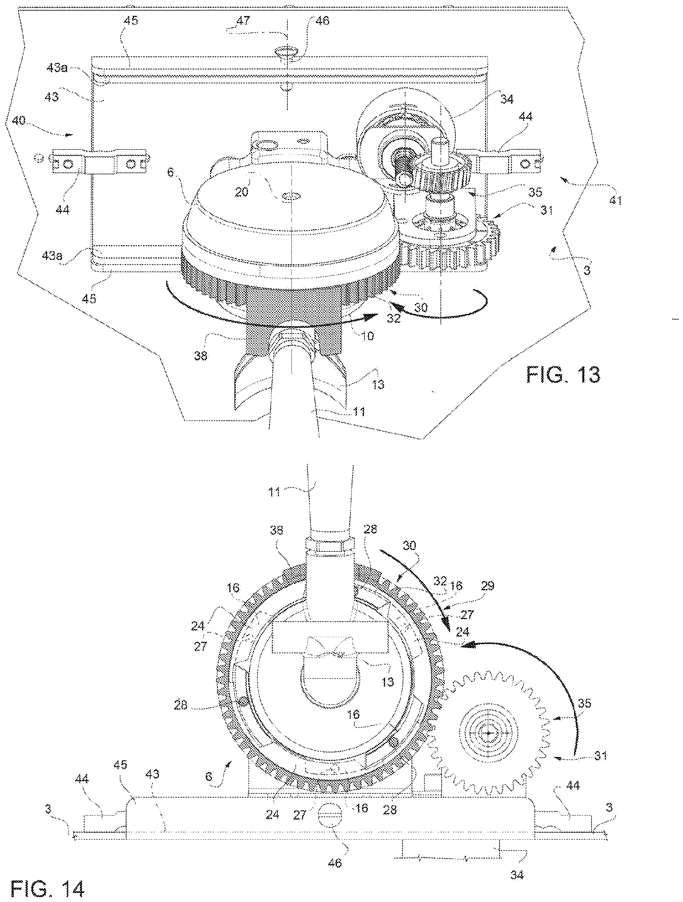

As shown in Figures 10, 11 and 13, conveniently, the toothed ring nut 30 is mounted on the supporting body 6 so that, when the toothed ring nut 30 is in the rest configuration, the fork 38 is angularly offset from a central configuration facing the operator and, preferably, is to the left of the operator (Figures 10 and 11). Preferably, moreover, the rest configuration of the toothed ring nut 30 is chosen so that, after the rotation of the toothed ring nut 30 from the rest configuration to the operating configuration, the fork 38 and, hence, the handle 11 of the filter-holder 7, is substantially in said central configuration in front of the operator (Figure 13).

Figures 12 and 14 show how the coupling device 17 is tight coupled by rotating the toothed ring nut 30 from the rest configuration (Figure 12) to the operating configuration (Figure 14), and the corresponding rotation of the filter-holder 7 from the insertion configuration (Figure 12) to the tight coupling configuration (Figure 14).

In the insertion configuration of the filter-holder 7, the handle 11 is inserted into the fork 38, the fins 16 are arranged between the transverse projections 24 in corresponding free spaces 36, and the edge 15 of the filter 14 engages the seal 23 frontally or is at least adjacent thereto.

Operation of the drive device 31 causes the toothed ring nut 30 to rotate, dragging the filter-holder 7 with it and sliding the fins 16 on the transverse projections 24, thus moving the filter-holder 7 upwards.

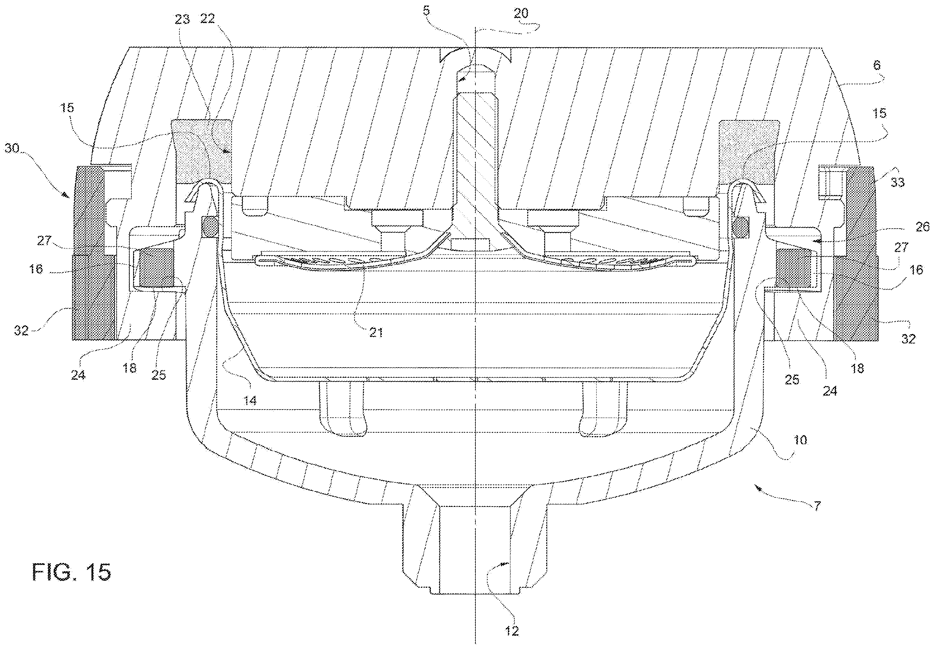

As shown in Figure 15, at the end of the rotation of the toothed ring nut 30 and the filter-holder 7, the latter is in the tight coupling configuration, in which the edge 15 of the filter 14 is compressed against the seal 23, so that the filter-holder 7 is fluid-tightly coupled to the supporting body 6.

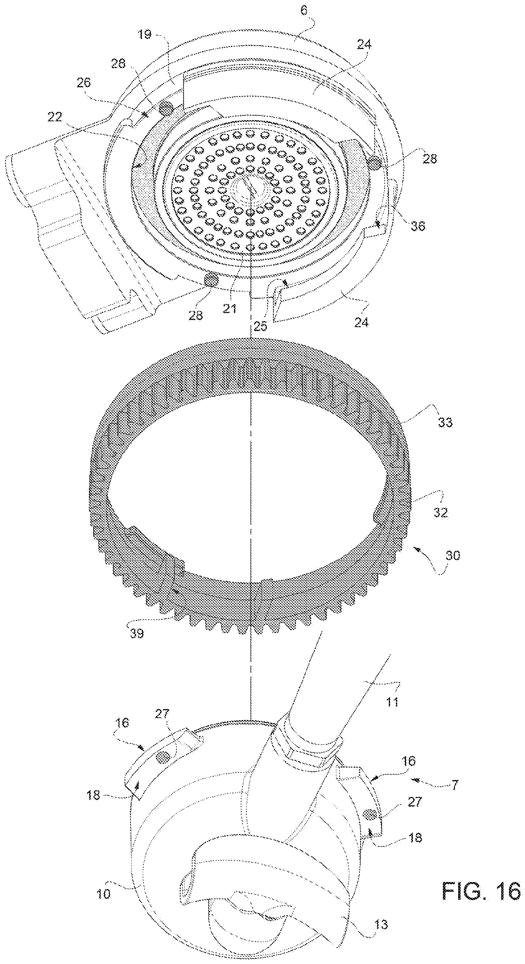

In the embodiment of Figures 16 to 23, the angular coupling between the toothed ring nut 30 and the filter-holder 7 is achieved by means of a seat or pocket 39 integral with the toothed ring nut 30 and configured to be engaged by one of the fins 16 of the filter-holder 7 when the toothed ring nut 30 is in the rest configuration and the filter-holder 7 is brought in the insertion configuration.

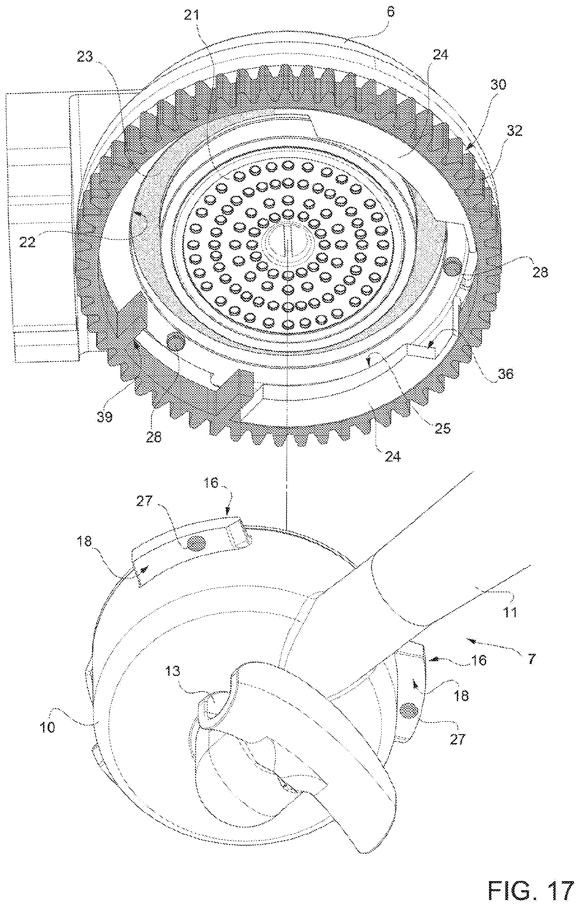

In particular, as shown in Figure 17, the pocket 39 is defined by two walls projecting from an inner surface of the toothed ring 30, extends within one of the free spaces 36 between the transverse projections 24 and is so sized as to contain a fin 16 with relative precision.

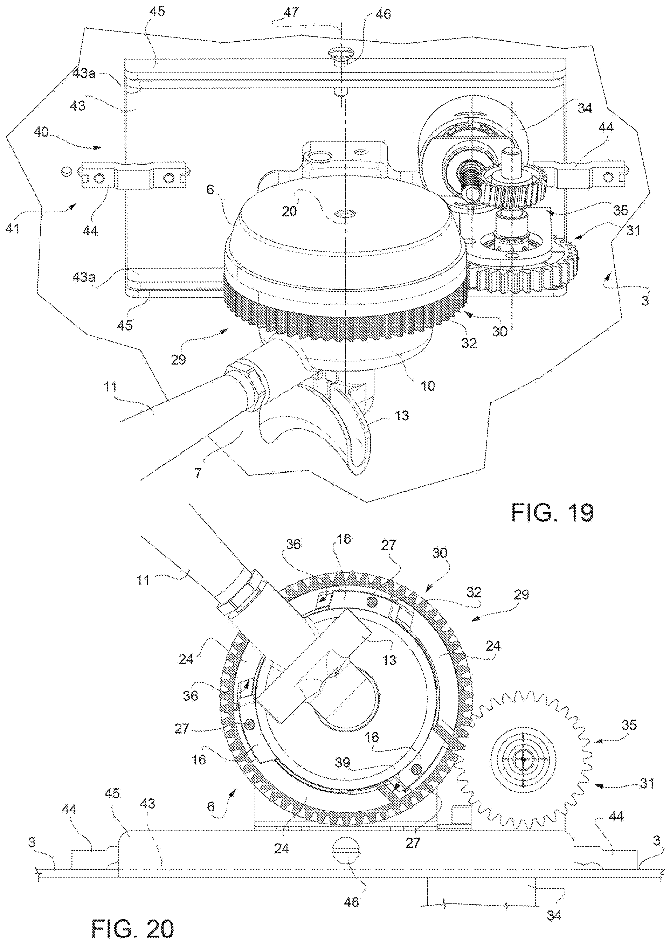

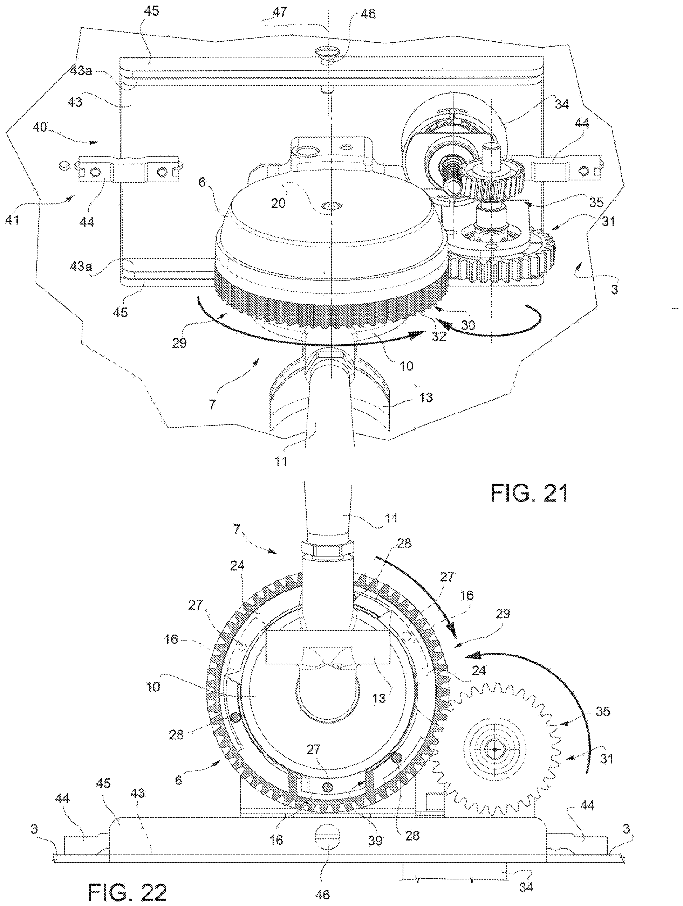

When the toothed ring nut 30 is in the rest configuration and the filter-holder 7 is inserted in the supporting body 6, one of the fins 16 is inserted in the pocket 39 (Figure 20) so as to constrain the filter-holder 7 to rotate together with the toothed ring nut 30 when the latter moves into the operating configuration. The rotation of the filter-holder 7 causes the fins 16 to engage the respective transverse projections 24, so resulting in the tight coupling of the coupling device 17 (Figure 22). In this regard, it is noted that in the shown example, the size of the pocket 39 is such that, during rotation of the filter-holder 7, the pocket 39 would interfere with the transverse projection 24 intended to cooperate with the fin 16 inserted in the pocket 39. Therefore, said transverse projection 24 is absent and the tight coupling of the coupling device 17 is effectively achieved by engaging the other fins with the respective transverse projections 24. In a variant not shown, the pocket 39 is so sized and shaped as to allow it to be rotated despite the presence of the transverse projection 24 intended to cooperate with the fin 16 inserted in the pocket 39.

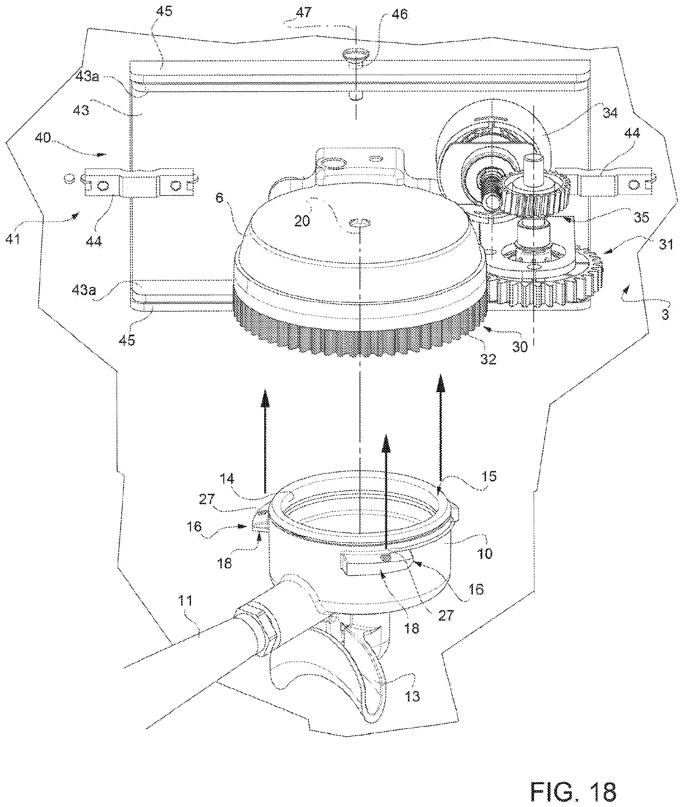

As shown in Figures 18, 19 and 21, the toothed ring nut 30 is conveniently mounted on the supporting body 6 so that, when the toothed ring nut 30 is in the rest configuration, it is possible to insert a fin 16 into the pocket 39 while keeping the handle 11 of the filter-holder 7 in a configuration angularly offset leftwards relative to a central configuration in front of the operator so that, after the rotation of the toothed ring nut 30 from the rest configuration to the operating configuration, the handle 11 is substantially in said central configuration in front of the operator.

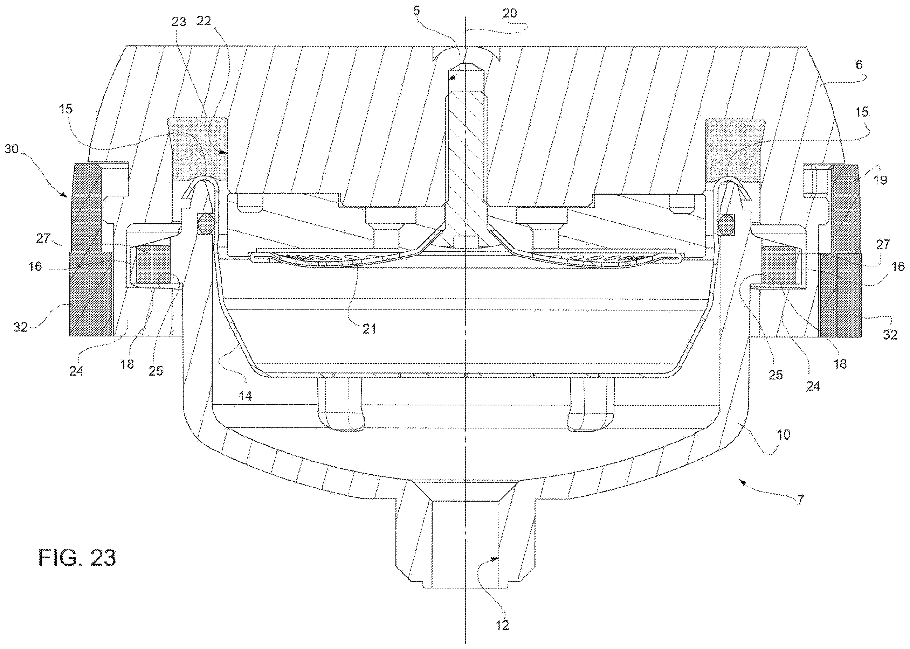

As shown in Figure 23, at the end of the rotation of the toothed ring nut 30 and the filter-holder 7, the latter is in the tight coupling configuration, in which the edge 15 of the filter 14 is compressed against the seal 23, so that the filter-holder 7 is fluid-tightly coupled to the supporting body 6.

Regardless of whether the coupling device 17 belongs to the first type or second type of actuation described above, the automation device 29 of the coffee machine 1 is configured, as mentioned above, to automatically tight-couple and uncouple the coupling device 17 so as to replace, or assist, the operator in performing such actions.

In order to implement such an automatism, which from a practical point of view requires the activation of the drive device 31 which rotates the toothed ring nut 30, the automation device 29 comprises a user interface 40 operatively coupled to the drive device 31 and configured to allow an operator to cause the toothed ring nut 30 to rotate in both directions of rotation in order to tight-couple and uncouple the coupling device 17.

In a basic embodiment not shown in the accompanying Figures, the user interface 40 may comprise a simple button or rocker switch with two or more positions, or one or more touch keys, or a touch-sensitive panel capable of detecting simple touches or more complex gestures made by an operator.

In a advanced embodiment shown in the accompanying Figures, according to a different and independent aspect of the invention, the user interface 40 is configured to transform actions performed manually by an operator on the filter-holder 7 into corresponding electrical commands for the drive device 31, such that the toothed ring nut 30 is rotated in opposite directions of rotation and for a given time.

In particular, the user interface 40 comprises:
- an electronic sensory system 41 configured to sense actions by an operator on the handle 11 of the filter-holder 7 and output an electrical output indicative of the actions by an operator on the handle 11 of the filter-holder 7, and
- an electronic control unit 42 communicatively coupled with, in particular electrically connected to, the electronic sensory system 41 and the drive device 31 to receive the electrical output of the electronic sensory system 41 and to generate corresponding electrical commands for the drive device 31 based on the received electrical output, so as to cause the toothed ring nut 30 to rotate in opposite directions of rotation to tight-couple and uncouple the coupling device 17 in response to actions made by an operator on the filter-holder 7.

As shown in Figure 1, the electronic sensory system 41 comprises a panel or plate 43, which is mounted on the front wall 3 and supports the supporting body 6, and one or more sensors 44 coupled to the plate 43 to sense forces applied to the plate 43 directly or indirectly through the filter-holder 7.

Conveniently, motion sensors 44 coupled to the plate 43 may be used as sensors 44 so as to sense (micro-)movements of the plate 43 caused by actions of an operator on the plate 43 either directly or indirectly, through the filter-holder 7.

The number, the technology and the arrangement of the motion sensors 44 are chosen such that they allow to sense (micro-)movements of the plate 43 caused by actions that are wished to be sensed of an operator on the plate 43 either directly or indirectly, through the filter-holder 7.

Conveniently, load cells 44 can be used as motion sensors 44, which are explicitly referred to in this description without losing generality.

Furthermore, since, by convention, the filter-holder of a coffee machine is rotated by an operator counterclockwise (rightwards with respect to the operator) to be locked on the supporting body and clockwise (leftwards with respect to the operator) to be unlocked, conveniently, the number, technology and the arrangement of the motion sensors are chosen such that they allow sensing (micro-)movements of the plate 43 caused by the force applied by the operator to the filter-holder 7 in order to rotate the latter anticlockwise and clockwise.

In this embodiment, the electronic control unit 42 is programmed to:
- determine, based on the electrical outputs of the load cells 44, the movements of the plate 43 caused by the actions manually performed by an operator on the handle 11 of the filter-holder 7, and
- generate electrical commands for the drive device 31 such that the latter causes the toothed ring 30 to rotate from the rest configuration to the operating configuration when the load cells 44 sense a movement of the plate 43 caused by a rightward (counterclockwise) thrust applied to the filter-holder 7 by the operator, and, conversely, from the operating configuration to the rest configuration when the load cells 44 sense a movement of the plate 43 caused by a leftward (clockwise) thrust applied to the filter-holder 7 by the operator.

In the embodiment shown in the accompanying Figures, the plate 43 has a rectangular shape and is delimited by a substantially horizontal lower and upper edges, and by two substantially vertical lateral edges. The lower and upper edges have respective extensions 43a projecting perpendicularly from the plate 43 outwards from the front wall 3 and arranged facing and contiguous with respective brackets 45 projecting from the lower and upper sides of a window in the front wall 3 in which the plate 43 is inserted.

Preferably, each extension 43a is connected to the respective bracket 45 by means of a pin 46 arranged substantially in the centre of the bracket 45 and coaxial to the other pin 46 so as to define, with the latter, a vertical rotation axis 47, about which the plate 43 may oscillate, in opposite directions, when the operator imparts a rightward or leftward thrust to the supporting group 6 through the filter-holder 7.

In order to sense the movement, i.e., the oscillation, of the plate 43, the load cells 44 are arranged between the plate 43 and the front wall 3 at the lateral edges of the plate 43, on the outside of the front wall 3.

In any case, the embodiment shown in Figures 1-23 is only an example of how many load cells 44 may be required and how they should be arranged with respect to the plate 43 and the front wall 3 in order to sense movements of the plate 43 in response to the rightward and leftward thrust imparted by an operator to the filter-holder 7 inserted in the supporting body 6. The number, the configuration and the orientation of the load cells 44 depends in fact on the type of load cell used.

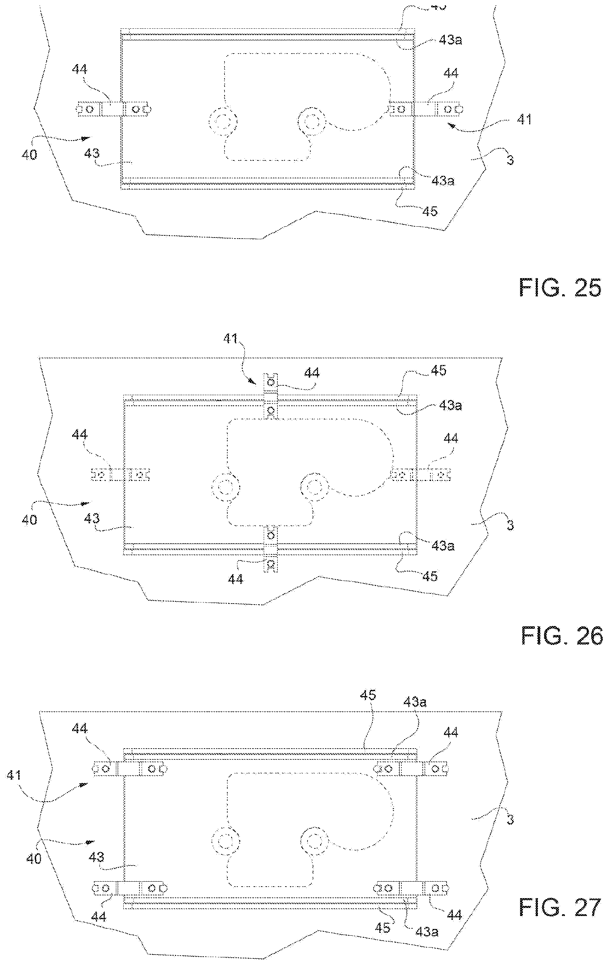

Furthermore, as shown in Figure 25, the presence of the pin 46 is also optional since the number and the arrangement of the load cells 44 may be sufficient to give the plate 43 and the movements thereof sufficient stability.

Finally, also the shape of the plate 43 shown in the accompanying Figures is purely for illustrative purposes and may be replaced by a mounting element of any shape and size as long as it is suitable to rigidly support the supporting body 6 and to allow the load cells 44 to be applied for sensing (micro-)movements of the plate 43 in response to a rightward and leftward thrust imparted by an operator to the filter-holder 7 inserted in the supporting body 6.

Depending on whether the coupling device 17 operates according to the first type or the second type of actuation, the tight coupling thereof, which, as mentioned above, is caused by the rotation of the toothed ring nut 30, takes place either in a fully automatic mode, in which the rotation of the toothed ring nut 30 is exclusively controlled by the electronic control unit 42 through the drive device 31, or, respectively, in a partially automatic mode, in which the rotation of the toothed ring nut 30 is carried out partly manually by the operator and partly automatically by the drive device 31.

In fact, in the first type of actuation, in which the filter-holder 7 is not rotated between the insertion configuration and the tight coupling configuration and the transverse projections 24 are carried by the toothed ring nut 30 to move relative to the fins 16, the tight coupling of the coupling device 17 occurs in a completely automatic manner when an operator places the filter-holder 7 in the insertion configuration and imparts a rightward thrust (if the convention is followed, or leftwards) as if he wanted to rotate it to lock it, thus causing a movement (oscillation) of the plate 43, corresponding electrical outputs of the load cells 44 and operation of the drive device 31, consequently the rotation of the toothed ring nut 30 in the operating configuration, in response to an electrical command from the electronic control unit 42.

Conversely, a thrust in the opposite direction, in this case to the left, imparted by the operator to the filter-holder 7 as if he wanted to unlock it to remove it, causes an opposite movement of the plate 43 and consequently the rotation of the toothed ring nut 30 from the operating configuration to the rest configuration.

On the other hand, in the second type of actuation, in which the filter-holder 7 is integral with the toothed ring nut 30 when the filter-holder 7 is in the insertion configuration and is rotated to move between the insertion configuration and the tight coupling configuration so as to cause the fins 16 to engage to, or disengage from, the transverse projections 24, the tight coupling of the coupling device 17 takes place in a partially automatic manner, that is, it occurs in a manual "servo-assisted" manner.

In particular, when the operator places the filter-holder 7 in the insertion configuration and imparts a rightward thrust (if the convention is followed, or leftwards), the filter-holder 7 actually starts rotating towards the tight coupling configuration but, at the same time, the load cells 44 senses a consequent thrust on the plate 43 and, consequently, the electronic control unit 42 activates the drive device 31 which rotates the toothed ring nut 30 into the operating configuration, thus completing the tight coupling of the coupling device 17 without the operator having to exert any more force on the filter-holder 7.

The uncoupling of the coupling device 17 is mainly automatic as the thrust imparted by the operator to the filter-holder 7 in the opposite direction, in this case to the left, does not have to be of such an extent as to overcome the tight coupling force, but it is sufficient that it is suitable for being sensed by the load cells 44 through the movement of the plate 43 so as to cause the rotation of the toothed ring nut 30 from the operating configuration to the rest configuration and, hene, the return of the filter-holder 7 to the insertion configuration.

It goes without saying that the tight coupling and uncoupling of the coupling device 17 may be achieved by acting directly on the plate 43, in particular by imparting thrusts directly on the plate 43, on opposite sides of the supporting body 6.

Finally, in a preferred embodiment, the automation device 29 is configured to control not only the tight coupling and uncoupling of the coupling device 17, but also to start and stop beverage delivery in response to appropriate actions manually performed by the operator on the handle 11 of the filter-holder 7.

Preferably, the delivery of the beverage is controlled similarly to that described above for the tight coupling of the coupling device 17 and, in particular, is carried out by means of load cells 44 which are mounted between the plate 43 and the front wall 3 to sense a movement of the plate 43 in directions that are different from the movements caused by the thrusts imparted to the filter-holder 7 to and from the tight coupling configuration.

The load cells 44 provided for this purpose may be the same as those intended to sense the movements of the plate 43 when tight coupling and uncoupling the coupling device 17, or may be distinct from those intended to sense the movements of the plate 43 when tight coupling and uncoupling the coupling device 17 and arranged in appropriate positions with respect to the plate 34. For the sake of simplicity, in the accompanying Figures all load cells 44 are shown with the same reference number, regardless of the type of movement they are intended to sense.

In a preferred embodiment, the command to start and stop the beverage delivery is imparted by the operator by exerting on the handle 11 of the filter-holder 7, when the latter is arranged in the tight coupling configuration, an upward and, respectively, a downward thrust. Since the filter-holder 7 is integrally coupled to the supporting body 6, the thrust imparted to the filter-holder 7 is transmitted to the plate 43 and is sensed by the load cells 44, whose electrical outputs cause the electronic control unit 42 to control the start or stop of a pump (not shown) that supplies water to the boiler 4.

In a different embodiment, the command to start and stop the beverage delivery may be given by the operator by applying to the handle 11 of the filter-holder 7, when the latter is arranged in the tight coupling configuration, a torque tending to rotate the handle rightwards and, respectively, leftwards.

Figures 25, 26 and 27 show examples of possible arrangements of the load cells 44 in order to sense the movements of the plate 43 caused by a thrust on the filter-holder 7 rightwards/leftwards and/or upwards/downwards.

In particular, Figure 25 shows a situation in which the thrusts on the filter-holder 7 rightwards/leftwards and/or upwards/downwards are sensed by the same pair of load cells 44 arranged at the smaller sides of the plate 43.

Figure 26 shows both the situation in which the thrusts on the filter-holder 7 rightwards/leftwards and/or upwards/downwards are sensed by the same pair of load cells 44 (shown in a continuous line) arranged at the larger sides of the plate 43, and the situation in which the thrusts on the filter-holder 7 rightwards/leftwards are sensed by a first pair of load cells 44 (shown in a dashed line) arranged at the smaller sides of the plate 43, while the thrusts on the filter-holder 7 upwards/downwards are sensed by a second pair of load cells 44 (shown in a continuous line) arranged at the larger sides of the plate 43.

In the end, Figure 27 shows the situation in which the thrusts on the filter-holder 7 rightwards/leftwards and/or upwards/downwards are sensed by four load cells 44 arranged near the four vertices of the plate 43.

Similarly to what has been said for the tight coupling and uncoupling of the coupling device 17, in a basic embodiment, also for the command to start and stop the beverage delivery the user interface 40 may comprise a simple button or a rocker switch with two or more positions, or a pair of touch keys, or even a touch-sensitive panel capable of sensing simple touches or a more complex gesture made by the operator.

It follows from the foregoing that the user interface 40 according to the advanced embodiment may be of a type capable of controlling both the tight coupling/uncoupling of the coupling device 17 and the start/stop of beverage delivery in response to actions made by an operator on the filter-holder 7, or of a type capable of controlling only one of the tight coupling/uncoupling of the coupling device 17 and the start/stop of beverage delivery.

## Claims

1. A coffee machine (1) comprising:
a frame (2);
a supporting body (6) mounted to the frame (2) and designed to deliver hot water for producing a beverage;
a filter-holder (7) designed to be fillable with a brewing material and to be releasably coupleable to the supporting body (6) to receive hot water therefrom for brewing the brewing material and producing a beverage;
a user interface (40) to allow a user to control operation of the coffee machine (1);
**characterised in that** the user interface (40) is configured to sense one or different actions by a user on the filter-holder (7) or one or different forces applied by a user to the frame (2) either directly or indirectly, through the filter-holder (7), and to cause beverage delivery to start and stop in response to sensed actions or forces.

2. The coffee machine (1) of claim **1,** wherein the user interface (40) is further configured to cause hot water delivery to the filter-holder (7) to start and stop in response to sensed actions or forces.

3. The coffee machine (1) of claim **2,** wherein the user interface (40) is further configured to sense either one or more of the following actions by a user on the filter-holder (7): rightwards, leftwards, upwards, and downwards, or one or more forces applied directly by a user on one or different areas of the frame (2).

4. The coffee machine (1) of claim **3,** wherein the user interface (40) is further configured to sense either actions by a user on the filter-holder (7) either rightwards and leftwards or upwards and downwards, or forces applied directly by a user on areas of the frame (2) on opposite sides of the supporting body (6).

5. The coffee machine (1) of any one of the preceding claims, wherein the user interface (40) comprises:
an electronic sensory system (41) configured to sense either one or different actions by a user on the filter-holder (7) or one or different forces applied to the frame (2) by a user either directly or indirectly, through the filter-holder (7), and responsively output an electrical output indicative of sensed actions or forces; and
an electronic control unit (42) communicatively coupled to the electronic sensory system (41) to receive the electrical output thereof and to generate electrical commands for the automation device (29) based on the electrical output of the electronic sensory system (41) to cause beverage delivery to start and stop in response to sensed actions or forces.

6. The coffee machine (1) of any one of the preceding claims, further comprising:
a coupling device (17) comprising a first coupling part (24) mounted on the supporting body (6) and a second coupling part (16) carried by the filter-holder (7); the coupling device (17) is configured to cause the filter-holder (7) to assume a tight-coupling configuration, in which the filter-holder (7) is tight-coupled to the supporting body (6), starting from an insertion configuration, in which the filter-holder (7) is loosely inserted to the supporting body (6), as a result of a relative movement of the first coupling part (24) and the second coupling part (16); and
an automation device (29) configured to cause the first coupling part (24) and the second coupling part (16) to relatively move at least partially automatically.

7. The coffee machine (1) of claim **6,** wherein the coupling device (17) is configured to cause the filter-holder (7) to assume the tight-coupling configuration as a result of a relative rotation of the first coupling part (24) and the second coupling part (16).

8. The coffee machine (1) of claim **7,** wherein the supporting body (6) has an axis (20), and the automation device (29) comprises a motorised member (30) operable to relatively rotate the first coupling part (24) and the second coupling part (16) about an axis (20) of the supporting body (6) and in opposite rotation directions.

9. The coffee machine (1) of any one of claims **6** to **8,** wherein the user interface (40) is further configured to operate the automation device (29) to cause the coupling device (17) to tight-couple and uncouple in response to sensed actions or forces.

10. The coffee machine (1) of claim **9,** wherein the user interface (40) is further configured to sense either rightwards, leftwards, upwards, and downwards actions by a user on the filter-holder (7) or forces directly applied by a user on areas of the frame (2) on the right, the left, above, and below the supporting body (16), and to cause the coupling device (17) to tight-couple and uncouple in response either to sensed rightwards and leftwards actions or to sensed forces on the right and on the left the supporting body (16), and the beverage delivery to start and stop in response either to sensed upwards and downwards actions or to sensed forces above and below the supporting body (16), or vice versa.

11. The coffee machine (1) of claim **9** or **10,** when dependent on claim **5,** wherein the electronic control unit (42) is further configured to output electrical commands for the automation device (29) based on the electrical output of the electronic sensory system (41) to cause the coupling device (17) to tight-couple and uncouple in response to sensed actions or forces.

12. The coffee machine (1) of claim **5,** wherein the electronic sensory system (41) comprises one or more sensors (44) coupled to the frame (2) to sense forces applied to the frame (2) either directly or indirectly, through the filter-holder (7).

13. The coffee machine (1) of claim **12,** wherein the one or more sensors (44) comprise one or more motion sensors (44) coupled to the frame (2) to sense (micro-)movements of the frame (2) caused by forces applied to the frame (2) either directly or indirectly, through the filter-holder (7).

14. The coffee machine (1) of claim **13,** wherein the one or more motion sensors (44) comprise one or more load cells (44).

## Patentansprüche

1. Kaffeemaschine (1), umfassend:
ein Gestell (2);
einen Haltekörper (6), der an dem Gestell (2) montiert ist und ausgelegt ist, heißes Wasser zum Erzeugen eines Getränks zuzuführen;
eine Filterhalterung (7), die so ausgelegt ist, dass sie mit einem Brühmaterial befüllbar ist und mit dem Haltekörper (6) lösbar koppelbar ist, um heißes Wasser von diesem zum Brühen des Brühmaterials und zum Erzeugen eines Getränks aufzunehmen;
eine Benutzerschnittstelle (40), um einem Benutzer zu ermöglichen, den Betrieb der Kaffeemaschine (1) zu steuern;
**dadurch gekennzeichnet, dass** die Benutzerschnittstelle (40) konfiguriert ist, eine oder verschiedene Maßnahmen seitens eines Benutzers an der Filterhalterung (7) oder eine oder verschiedene Kräfte, die durch einen Benutzer auf das Gestell (2) ausgeübt werden, entweder direkt oder indirekt durch die Filterhalterung (7) zu erfassen und zu veranlassen, dass Getränkeausgabe als Reaktion auf die erfassten Maßnahmen oder Kräfte startet und stoppt.

2. Kaffeemaschine (1) nach Anspruch **1,** wobei die Benutzerschnittstelle (40) ferner konfiguriert ist, als Reaktion auf erfasste Maßnahmen oder Kräfte zu veranlassen, dass eine Heißwasserzufuhr zu der Filterhalterung (7) startet und stoppt.

3. Kaffeemaschine (1) nach Anspruch **2,** wobei die Benutzerschnittstelle (40) ferner konfiguriert ist, entweder eine oder mehrere der folgenden Maßnahmen durch einen Benutzer an der Filterhalterung (7) zu erfassen: nach rechts, nach links, aufwärts und abwärts gerichtet, oder eine oder mehrere Kräfte, die durch einen Benutzer direkt auf einen oder verschiedene Bereiche des Gestells (2) ausgeübt werden.

4. Kaffeemaschine (1) nach Anspruch **3,** wobei die Benutzerschnittstelle (40) ferner konfiguriert ist, entweder Maßnahmen seitens eines Benutzers an der Filterhalterung (7) entweder nach rechts und nach links oder nach oben und nach unten, oder Kräfte, die durch einen Benutzer direkt auf Bereiche des Gestells (2) auf gegenüberliegenden Seiten des Haltekörpers (6) ausgeübt werden, zu erfassen.

5. Kaffeemaschine (1) nach einem der vorhergehenden Ansprüche, wobei die Benutzerschnittstelle (40) umfasst:
ein elektronisches Sensorsystem (41), das konfiguriert ist, entweder eine oder verschiedene Maßnahmen seitens eines Benutzers an der Filterhalterung (7) oder eine oder verschiedene Kräfte, die durch einen Benutzer auf das Gestell (2) ausgeübt werden, entweder direkt oder indirekt durch die Filterhalterung (7), zu erfassen, und als Reaktion eine elektrische Ausgabe auszugeben, die für erfasste Maßnahmen oder Kräfte indikativ ist; und
eine elektronische Steuereinheit (42), die mit dem elektronischen Sensorsystem (41) kommunikativ gekoppelt ist, um die elektrische Ausgabe von diesem zu erhalten und elektrische Befehle für die Automatisierungsvorrichtung (29) auf der Basis der elektrischen Ausgabe des elektronischen Sensorsystems (41) zu erzeugen, um zu veranlassen, dass als Reaktion auf erfasste Maßnahmen oder Kräfte Getränkeausgabe startet und stoppt.

6. Kaffeemaschine (1) nach einem der vorhergehenden Ansprüche, ferner umfassend:
eine Kopplungsvorrichtung (17), die ein erstes Kopplungsteil (24), das an dem Haltekörper (6) montiert ist, und ein zweites Kopplungsteil (16), das durch die Filterhalterung (7) getragen wird, umfasst; wobei die Kopplungsvorrichtung (17) konfiguriert ist, zu veranlassen, dass die Filterhalterung (7) eine dichte Kopplungskonfiguration annimmt, bei der die Filterhalterung (7) beginnend von einer Einsetzkonfiguration, bei der die Filterhalterung (7) lose in den Haltekörper (6) eingesetzt wird, als ein Ergebnis einer Relativbewegung des ersten Kopplungsteils (24) und des zweiten Kopplungsteils (16) mit dem Haltekörper (6) dicht gekoppelt ist; und
eine Automatisierungsvorrichtung (29), die konfiguriert ist, zu veranlassen, dass sich das erste Kopplungsteil (24) und das zweite Kopplungsteil (16) zumindest teilweise automatisch relativ bewegen.

7. Kaffeemaschine (1) nach Anspruch 6, wobei die Kopplungsvorrichtung (17) konfiguriert ist, zu veranlassen, dass die Filterhalterung (7) als ein Ergebnis einer Relativdrehung des ersten Kopplungsteils (24) und des zweiten Kopplungsteils (16) die dichte Kopplungskonfiguration annimmt.

8. Kaffeemaschine (1) nach Anspruch **7,** wobei der Haltekörper (6) eine Achse (20) hat, und die Automatisierungsvorrichtung (29) ein motorisiertes Element (30) umfasst, das betreibbar ist, um das erste Kopplungsteil (24) und das zweite Kopplungsteil (16) um eine Achse (20) des Haltekörpers (6) und in entgegengesetzten Drehrichtungen relativ zu drehen.

9. Kaffeemaschine (1) nach einem der Ansprüche **6** bis **8,** wobei die Benutzerschnittstelle (40) ferner konfiguriert ist, die Automatisierungsvorrichtung (29) zu betreiben, um zu veranlassen, dass die Kopplungsvorrichtung (17) als Reaktion auf erfasste Maßnahmen oder Kräfte dicht koppelt und entkoppelt.

10. Kaffeemaschine (1) nach Anspruch **9,** wobei die Benutzerschnittstelle (40) ferner konfiguriert ist, entweder nach rechts, nach links, aufwärts und abwärts gerichtete Maßnahmen durch einen Benutzer an der Filterhalterung (7), oder Kräfte, die durch einen Benutzer direkt auf Bereiche des Gestells (2) auf der rechten Seite, der linken Seite, über und unter dem Haltekörper (16) ausgeübt werden, zu erfassen, und zu veranlassen, dass die Kopplungsvorrichtung (17) als Reaktion entweder auf erfasste Maßnahmen nach rechts und nach links oder auf erfasste Kräfte auf der rechten und auf der linken Seite des Haltekörpers (16) dicht koppelt und entkoppelt, und als Reaktion entweder auf erfasste Aufwärts- und Abwärtsmaßnahmen oder auf erfasste Kräfte über und unter dem Haltekörper (16) die Getränkeausgabe zu starten und zu stoppen oder umgekehrt.

11. Kaffeemaschine (1) nach Anspruch **9** oder **10,** wenn dieser von Anspruch **5** abhängt, wobei die elektronische Steuereinheit (42) ferner konfiguriert ist, elektrische Befehle für die Automatisierungsvorrichtung (29) auf der Basis der elektrischen Ausgabe des elektronischen Sensorsystems (41) auszugeben, um zu veranlassen, dass die Kopplungsvorrichtung (17) als Reaktion auf erfasste Maßnahmen oder Kräfte dicht koppelt oder entkoppelt.

12. Kaffeemaschine (1) nach Anspruch **5,** wobei das elektronische Sensorsystem (41) einen oder mehrere Sensoren (44), die mit dem Gestell (2) gekoppelt sind, umfasst, um Kräfte, die auf das Gestell (2) ausgeübt werden, entweder direkt oder indirekt durch die Filterhalterung (7) zu erfassen.

13. Kaffeemaschine (1) nach Anspruch **12,** wobei der eine oder die mehreren Sensoren (44) einen oder mehrere Bewegungssensoren (44), die mit dem Gestell (2) gekoppelt sind, umfassen, um (Mikro)-Bewegungen des Gestells (2), die durch Kräfte verursacht werden, die auf das Gestell (2) ausgeübt werden, entweder direkt oder indirekt durch die Filterhalterung (7) zu erfassen.

14. Kaffeemaschine (1) nach Anspruch **13,** wobei der eine oder die mehreren Bewegungssensoren (44) eine oder mehrere Kraftmessdosen (44) umfassen.

## Revendications

1. Machine à café (1) comprenant :
un bâti (2) ;
un corps de support (6) monté sur le bâti (2) et conçu pour distribuer de l'eau chaude afin de produire une boisson ;
un porte-filtre (7) conçu pour pouvoir être rempli avec une matière d'infusion et pour être couplé, de manière amovible, au corps de support (6) afin de recevoir l'eau chaude de ce dernier pour infuser la matière d'infusion et produire une boisson ;
une interface utilisateur (40) pour permettre à un utilisateur de commander le fonctionnement de la machine à café (1) ;
**caractérisée en ce que** l'interface utilisateur (40) est configurée pour détecter une ou des actions différentes par un utilisateur sur le porte-filtre (7) ou une ou des forces différentes appliquées par un utilisateur sur le bâti (2) directement ou indirectement, par le biais du porte-filtre (7) et pour provoquer le début et l'arrêt d'une distribution de boisson en réponse aux actions ou aux forces détectées.

2. Machine à café (1) selon la revendication 1, dans laquelle l'interface utilisateur (40) est en outre configurée pour provoquer le début et l'arrêt de la distribution d'eau chaude dans le porte-filtre (7) en réponse aux actions ou aux forces détectées.

3. Machine à café (1) selon la revendication 2, dans laquelle l'interface utilisateur (40) est en outre configurée pour détecter une ou plusieurs des actions suivantes par un utilisateur sur le porte-filtre (7) : vers la droite, vers la gauche, vers le haut et vers le bas, ou une ou plusieurs forces appliquées directement par un utilisateur sur une ou différentes zones du boîtier (2).

4. Machine à café (1) selon la revendication 3, dans laquelle l'interface utilisateur (40) est en outre configurée pour détecter des actions par un utilisateur sur le porte-filtre (7) vers la droite, et vers la gauche ou vers le haut et vers le bas, ou des forces appliquées directement par un utilisateur sur des zones du bâti (2) sur les côtés opposés du corps de support (6).

5. Machine à café (1) selon l'une quelconque des revendications précédentes, dans laquelle l'interface utilisateur (40) comprend :
un système sensoriel électronique (41) configuré pour détecter une ou des actions différentes par un utilisateur sur le porte-filtre (7) ou une ou des forces différentes appliquées sur le bâti (2) par un utilisateur directement ou indirectement, par le biais du porte-filtre (7) et produire, en réponse, une sortie électrique indicative des actions ou des forces détectées ; et
une unité électronique de commande (42) couplée, en communication, au système sensoriel électronique (41) afin de recevoir sa sortie électrique et afin de générer des commandes électriques pour le dispositif d'automatisation (29) sur la base de la sortie électrique du système sensoriel électronique (41) afin de provoquer le début ou l'arrêt de la distribution de boisson en réponse aux actions ou aux forces détectées.

6. Machine à café (1) selon l'une quelconque des revendications précédentes, comprenant en outre :
un dispositif de couplage (17) comprenant une première partie de couplage (24) montée sur le corps de support (6) et une deuxième partie de couplage (16) portée par le porte-filtre (7) ; le dispositif de couplage (17) est configuré pour amener le porte-filtre (7) à adopter une configuration de couplage avec serrage, dans laquelle le porte-filtre (7) est couplé avec serrage au corps de support (6), à partir d'une configuration d'insertion, dans laquelle le porte-filtre (7) est inséré, sans serrage, dans le corps de support (6), suite à un mouvement relatif de la première partie de couplage (24) et de la deuxième partie de couplage (16) ; et
un dispositif d'automatisation (29) configuré pour amener la première partie de couplage (24) et la deuxième partie de couplage (16) à se déplacer relativement de manière au moins partiellement automatique.

7. Machine à café (1) selon la revendication 6, dans laquelle le dispositif de couplage (17) est configuré pour amener le porte-filtre (7) à adopter la configuration de couplage avec serrage suite à une rotation relative de la première partie de couplage (24) et de la deuxième partie de couplage (16).

8. Machine à café (1) selon la revendication 7, dans laquelle le corps de support (6) a un axe (20), et le dispositif d'automatisation (29) comprend un élément motorisé (30) pouvant être actionné pour faire tourner relativement la première partie de couplage (24) et la deuxième partie de couplage (16) autour d'un axe (20) du corps de support (6) et dans des directions de rotation opposées.

9. Machine à café (1) selon l'une quelconque des revendications 6 à 8, dans laquelle l'interface utilisateur (40) est en outre configurée pour actionner le dispositif d'automatisation (29) afin d'amener le dispositif de couplage (17) à se coupler avec serrage et se découpler en réponse aux actions ou aux forces détectées.

10. Machine à café (1) selon la revendication 9, dans laquelle l'interface utilisateur (40) est en outre configurée pour détecter des actions vers la droite, vers la gauche, vers le haut et vers le bas par un utilisateur sur le porte-filtre (7) ou des forces directement appliquées par un utilisateur sur des zones du bâti (2) sur la droite, la gauche, au-dessus et au-dessous du corps de support (16) et pour amener le dispositif de couplage (17) à se coupler avec serrage et se découpler en réponse aux actions vers la droite et vers la gauche détectées ou aux forces détectées sur la droite ou sur la gauche du corps de support (16), et le début et l'arrêt de la distribution de boisson en réponse aux actions vers le haut et vers le bas détectées ou aux forces détectées au-dessus et au-dessous du corps de support (16) ou vice versa.

11. Machine à café (1) selon la revendication 9 ou 10, lorsqu'elle dépend de la revendication 5, dans laquelle l'unité électronique de commande (42) est en outre configurée pour produire des commandes électriques pour le dispositif d'automatisation (29) sur la base de la sortie électrique du système sensoriel électronique (41) afin d'amener le dispositif de couplage (17) à se coupler avec serrage et à se découpler en réponse aux actions ou aux forces détectées.

12. Machine à café (1) selon la revendication 5, dans laquelle le système électronique sensoriel (41) comprend un ou plusieurs capteurs (44) couplés au bâti (2) afin de détecter des forces appliquées sur le bâti (2) directement ou indirectement, par le biais du porte-filtre (7).

13. Machine à café (1) selon la revendication 12, dans laquelle les un ou plusieurs capteurs (44) comprennent un ou plusieurs capteurs de mouvement (44) couplés au bâti (2) afin de détecter des (micro)mouvements du bâti (2) provoqués par les forces appliquées sur le bâti (2) directement ou indirectement, par le biais du porte-filtre (7).

14. Machine à café (1) selon la revendication 13, dans laquelle les un ou plusieurs capteurs de mouvement (44) comprennent une ou plusieurs cellules de charge (44).
